(19) Europäisches Patentamt / European Patent Office / Office européen des brevets

(11) **EP 3 025 134 B1**

(12) **EUROPÄISCHE PATENTSCHRIFT**

(45) Veröffentlichungstag und Bekanntmachung des Hinweises auf die Patenterteilung:
**18.05.2022   Patentblatt 2022/20**

(21) Anmeldenummer: **14758279.5**

(22) Anmeldetag: **02.07.2014**

(51) Internationale Patentklassifikation (IPC):
**G01L 1/14** *(2006.01)*      **G01L 5/00** *(2006.01)*
**G01L 5/24** *(2006.01)*

(52) Gemeinsame Patentklassifikation (CPC):
**G01L 5/243; G01L 1/142; G01L 1/144;**
G01L 5/0042

(86) Internationale Anmeldenummer:
**PCT/DE2014/100225**

(87) Internationale Veröffentlichungsnummer:
**WO 2015/007267 (22.01.2015 Gazette 2015/03)**

(54) **SYSTEM ZUM MESSEN EINER AXIALKRAFT EINER SCHRAUBVERBINDUNG**

SYSTEM FOR MEASURING AN AXIAL FORCE OF A THREADED CONNECTION

SYSTÈME DE MESURE D'UNE FORCE AXIALE D'UN ASSEMBLAGE À VIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.07.2013   DE 102013107671**

(43) Veröffentlichungstag der Anmeldung:
**01.06.2016   Patentblatt 2016/22**

(73) Patentinhaber:
• **Erwin Halder KG**
  **88480 Achstetten-Bronnen (DE)**
• **Fraunhofer-Gesellschaft zur Förderung der angewandten Forschung e.V.**
  **80686 München (DE)**

(72) Erfinder:
• **HALDER, Stefan**
  **88480 Achstetten-Bronnen (DE)**
• **HUMMEL, Dieter**
  **88447 Warthausen (DE)**
• **MARTIN, Jörg**
  **09235 Burkhardtsdorf (DE)**
• **WEISS, Alexander**
  **09113 Chemnitz (DE)**
• **MÖBIUS, Martin**
  **09112 Chemnitz (DE)**
• **SPUDAT, Christian**
  **09126 Chemnitz (DE)**
• **GESSNER, Thomas**
  **09113 Chemnitz (DE)**
• **OTTO, Thomas**
  **09249 Taura (DE)**

(74) Vertreter: **Hentrich Patent- & Rechtsanwälte PartG mbB**
  **Syrlinstraße 35**
  **89073 Ulm (DE)**

(56) Entgegenhaltungen:
EP-A1- 1 897 778        DE-A1- 10 138 261
DE-A1- 19 831 372       DE-A1-102009 043 267

**Beschreibung**

Die Erfindung betrifft ein System zum Messen einer Axialkraft in einer Schraubverbindung, mit einer Unterlegscheibe nach Anspruch 1 2- und mit einem Sensor, das System bestehend aus einer elektrisch leitenden ersten Platte, aus einer elektrisch leitenden zweiten Platte, aus einer zwischen der ersten Platte und der zweiten Platte angeordneten und die erste Platte mit der zweiten Platte zu einem Plattenkondensator verbindenden elektrisch isolierenden Isolationsschicht, die unter Krafteinwirkung elastisch deformierbar ist, weiterhin bestehend aus einer Erregerspule, aus einer mit der Erregerspule induktiv koppelbaren Empfängerspule, sowie aus einem der Empfängerspule zugeordneten Kontaktpaar zum elektrisch leitenden Verbinden der Empfängerspule mit der ersten Platte und mit der zweiten Platte, wobei durch eine elektrisch leitende Kontaktierung der Empfängerspule mit der ersten Platte und der zweiten Platte ein Schwingkreis gebildet ist. Weiterhin umfasst die Erfindung ein Verfahren nach Anspruch 10 zum induktiven Messen einer Axialkraft einer Schraubverbindung, ein Verfahren zum Herstellen einer Unterlegscheibe sowie Komponenten zu dem System. Weiterhin umfasst die Erfindung eine Unterlegscheibe und einen Sensor für ein derartiges System.

Schraubverbindungen zählen - neben Nietverbindungen - zu den wichtigsten Verbindungsmöglichkeiten mehrerer Bauteile und sind bereits seit dem Altertum bekannt. Ein hierbei auftretendes Problem ist jedoch die Tatsache, dass die Größe der durch Schraubverbindung wirkenden Axialkraft nicht direkt messbar ist. Dieses Problem wird auch durch den Einsatz von Drehmomentschlüsseln nicht behoben, da hieraus lediglich das Anzugmoment bekannt ist, was aber keine verlässlichen Aussagen bezüglich der Axialkraft der Schraubverbindung ermöglicht. Dies ist insbesondere dann nicht der Fall, wenn die für die Schraubverbindung verwendeten Schrauben nicht in einem einwandfreien Zustand sind. Aus diesem Grund werden bei sicherheitsrelevanten Schraubverbindungen in der Regel Schrauben größeren Durchmessers verwendet, um auch bei einer nicht vollständigen Kraftübertragung die Sicherheit der Schraubverbindung gewährleisten zu können.

Ein weiteres Problem ist aber auch die fehlende Möglichkeit der Überprüfung der Axialkraft der Schraubverbindung zu einem späteren Zeitpunkt. Dies ist nicht ohne weiteres möglich, vielmehr ist es notwendig, die Schraubverbindung zunächst zu lösen und dann wieder mit einem vorgegebenen Drehmoment zu schließen.

Durch die axiale Staffelung der ersten Platte, der Isolationsschicht und der zweiten Platte ist ein Plattenkondensator realisiert. Die Isolationsschicht fungiert dabei als Dielektrikum und die erste Platte und die zweite Platte bilden die Elektroden des Plattenkondensators. Die Kapazität C des Plattenkondensators verhält sich dabei umgekehrt proportional zum Abstand d der durch die erste Platte und die zweite Platte gebildeten Elektroden und wird durch die nachstehende Formel beschrieben:

$$C = \varepsilon_0 \varepsilon_r \frac{A}{d}$$

wobei es sich bei $\varepsilon_0$ um die elektrische Feldkonstante, bei $\varepsilon_r$ um die relative Permeabilität handelt und A die Fläche der Platten und d deren relativen Abstand voneinander beschreibt. Dadurch kann eine auf den Plattenkondensator wirkende Axialkraft kapazitiv gemessen werden, da bei Auftreten einer auf den Plattenkondensator wirkenden Axialkraft die elastisch deformierbare Isolationsschicht komprimiert wird, wodurch sich der Abstand d zwischen der ersten Platte und der zweiten Platte verringert und sich die Kapazität C des Plattenkondensators erhöht, bedingt durch die reziproke Proportionalität zwischen dem Abstand d und der Kapazität C des Plattenkondensators.

Das obenstehend vorgestellte grundlegende Prinzip zum kapazitiven Messen einer Axialkraft einer Schraubverbindung ist bereits aus der DE 198 31 372 A1 bekannt. Hierbei ist ein durch eine als Plattenkondensator gebildete Unterlegscheibe vorgesehen, bestehend aus der elektrisch leitenden ersten Platte, der elektrisch leitenden zweiten Platte, sowie aus der zwischen der ersten Platte und der zweiten Platte angeordneten und die erste Platte mit der zweiten Platte zu dem Plattenkondensator verbindenden elektrisch isolierenden Isolationsschicht, die unter Krafteinwirkung elastisch deformierbar ist. Bei einer auftretenden Axialkraft verbiegt sich die obere leitende Platte, wodurch sich die Kapazität der Unterlegscheibe verändert. Jedoch besteht hierbei das Problem, dass sich der Abstand zwischen der ersten Platte und der zweiten Platte bei einer auftretenden Axialkraft nicht gleichmäßig verändert. Vielmehr besteht bei einer Unterlegscheibe nach der DE 198 31 372 A1 die Gefahr, dass es bei einer großen Axialkraft zu einem Kontakt zwischen der deformierten ersten Platte und der zweiten Platte kommt, wodurch eine Messung der auftretenden Axialkraft nicht mehr möglich ist. Weiterhin ist durch die Verformung der Platte eine Wiederverwendung der Unterlegscheibe, ausgeschlossen, wenn nach einem Lösen der Schraubverbindung diese erneut angezogen werden soll. Zudem entbehrt die DE 198 31 372 A1 jeglicher Offenbarung zur Auswertung der gemessenen Kapazitätsänderung.

Ein System zur Messung der Axialkraft einer Schraubverbindung gemäß dem Oberbegriff des Anspruchs 5 ist der EP 1 897 778 A1 zu entnehmen. Die darin beschriebene Unterlegscheibe nutzt den mit einem Kondensator gebildeten Schwingkreis, um die Kraft der Schraubverbindung von Eisenbahnschienen zu überwachen.

Der Erfindung liegt die Aufgabe zugrunde, ein System, eine Unterlegscheibe und ein Verfahren bereitzustellen, die eine exaktere Messung der axialen Kraft einer Schraubverbindung ermöglichen.

Diese Aufgabe wird durch eine Unterlegscheibe mit den Merkmalen des Anspruchs , durch ein System mit den Merkmalen des Anspruchs 5 und durch ein Verfahren mit den Merkmalen des Anspruchs 10 gelöst. Bevorzugte Ausgestaltungen der Erfindung sind in den abhängigen Ansprüchen angegeben.

Durch die elektrisch leitende Verbindung des der Empfängerspule zugeordneten Kontaktpaars mit der ersten Platte und mit der zweiten Platte des Plattenkondensators ist ein Schwingkreis - nämlich ein passiver Schwingkreis - gebildet, dessen Resonanzfrequenz $f_r$ - wie der nachstehenden Formel zu entnehmen ist - von der Kapazität C des Plattenkondensators abhängt und somit vom Abstand d zwischen der ersten Platte und der zweiten Platte.

$$f_r = \frac{1}{2\pi}\frac{1}{\sqrt{L_2 C}} = \frac{\sqrt{d}}{2\pi\sqrt{L_2 \varepsilon_0 \varepsilon_r A}}$$

Hierbei ist $L_2$ die Induktivität der Empfängerspule. Die Empfängerspule kann dabei fest oder lösbar mit dem Plattenkondensator verbunden sein. Weiterhin kann durch die Empfängerspule ein induktives Auslesen der Resonanzfrequenz erfolgen. Ist die Empfängerspule fest dem Plattenkondensator beziehungsweise der Unterlegscheibe zugeordnet, muss hierzu lediglich ein Basissensor vorgehalten werden, der eine Erregerspule beinhaltet, die mit der Empfängerspule induktiv gekoppelt werden kann. Ein derartiger Basissensor kann weiterhin mit einer Spannungsquelle elektrisch leitend verbunden werden, die eine mit einer verstellbaren Erregerfrequenz alternierende Spannung bereitstellt. Durch die induktive Kopplung der Empfängerspule mit der Erregerspule schwingt der passive Schwingkreis, der durch die Empfängerspule und den Plattenkondensator gebildet ist, mit der Erregerfrequenz. Durch Bestimmen des Spannungsverlaufes an einem der Erregerspule nachgeschalteten Widerstand als Funktion der Erregerfrequenz kann die Resonanzfrequenz des passiven Schwingkreises bestimmt werden. Durch eine entsprechende Kalibrierung der Unterlegscheibe im Vorfeld kann dann aus der Verschiebung der Resonanzfrequenz des passiven Schwingkreises auf die Axialkraft der Schraubverbindung geschlossen werden. Die Empfängerspule kann selbstredend auch von der Unterlegscheibe getrennt sein und dem Sensor zugeordnet werden. In diesem Fall handelt es sich - in Abgrenzung zu dem vorgenannten Basissensor - um einen Vollsensor.

Die Unterlegscheibe besteht aus der elektrisch leitenden ersten Platte, der elektrisch leitenden zweiten Platte, sowie aus der zwischen der ersten Platte und der zweiten Platte angeordneten und die erste Platte mit der zweiten Platte zu dem Plattenkondensator verbindenden elektrisch isolierenden Isolationsschicht, die unter Krafteinwirkung elastisch deformierbar ist.

Erfindungsgemäß ist vorgesehen, dass jeweils auf der von der Isolationsschicht wegweisenden Oberfläche der ersten Platte und der zweiten Platte eine elektrisch isolierende Schutzschicht angeordnet ist. Durch eine derartige Schutzschicht ist insbesondere gewährleistet, dass bei einer auf die Unterlegscheibe wirkenden Axialkraft lediglich die als Dielektrikum dienende Isolationsschicht deformiert wird und somit eine Änderung der Kapazität des Plattenkondensators auf die Abstandsänderung zwischen der ersten Platte und der zweiten Platte zurückzuführen ist. Zudem ist dadurch eine Beeinflussung der Kondensatoreigenschaften durch einen metallenen Schraubenkopf oder einem zu verschraubenden Material ausgeschlossen.

Als günstig hat es sich zudem gezeigt, wenn die Schutzschicht aus einem Material gebildet ist, dessen Elastizitätsmodul gleich oder größer als das Elastizitätsmodul der ersten Platte und der zweiten Platte ist. Dadurch ist insbesondere gewährleistet, dass durch die Isolationsschicht keine Kraftaufnahme erfolgt und weiterhin eine ausreichende Härte vorhanden ist, um beim Herstellen einer Schraubverbindung eine Flächenpressung zu erzielen und damit stets eine axiale Parallelverschiebung der Elektroden des Plattenkondensators zueinander zu erreichen. Hierdurch wird eine gleichmäßige Deformation der Isolationsschicht erreicht, was die Reproduzierbarkeit der gemessenen Werte der Kapazitätsänderung merklich verbessert. Zudem kann dadurch die Kratzempfindlichkeit der Unterlegscheibe reduziert werden, wodurch die erfindungsgemäße Unterlegscheibe mehrmals verwendet werden kann.

Besonders bewährt hat es sich hierbei auch, wenn die Schutzschicht durch eine Keramik gebildet ist. Neben der gewünschten mechanischen Stabilität und Härte kann durch die Verwendung einer geeigneten Keramik auch eine gute elektrische Isolation und eine äußerst hohe Temperaturbeständigkeit erreicht werden. Hierbei ist es besonders vorteilhaft, wenn die Schutzschicht durch $Al_2O_3$ gebildet ist. Mit einer Schutzschicht aus $Al_2O_3$ ist ein Material gewählt, das sowohl ein sehr großes Elastizitätsmodul aufweist und gleichzeitig herausragend elektrisch isolierend ist. Weiterhin lassen sich Keramiken und insbesondere $Al_2O_3$ ausgezeichnet auf Metallen aufbringen und zeigen eine geringe Wasseraufnahme.

Weiterhin als günstig hat es sich erwiesen, wenn die Isolationsschicht aus einem Material gebildet ist, das einer Gruppe entstammt, die härtbare Harze und Polymere beinhaltet, wobei es sich in diesem Zusammenhang als besonders vorteilhaft erwiesen hat, wenn die Isolationsschicht aus Cycloolefin-Copolymer gebildet ist. Durch eine derartige Materialwahl wird insbesondere sichergestellt, dass bei einer auf die Unterlegscheibe wirkenden Axialkraft die Deformierung der Isolationsschicht rein elastisch erfolgt. Gleichzeitig sind die gewählten Materialien hart genug, um bei größeren Axialkräften die Gefahr von Kurzschlüssen zwischen der ersten Platte und der zweiten Platte zu reduzieren beziehungsweise gänzlich auszuschließen. Zudem zeichnen sich die vorgenannten Materialien auch durch ihre hohe Temperaturstabilität und ihre geringe Wasseraufnahme aus.

Vorteilhaft ist es weiterhin, wenn der ersten Platte und der zweiten Platte jeweils eine elektrische Kontaktstelle zugeordnet ist. Dadurch wird insbesondere das Messen der Kapazität des durch die erste Platte, die zweite Platte und die Isolationsschicht gebildeten Plattenkondensators erleichtert, um auf die Axialkraft der Schraubverbindung rückschließen zu können. Im Rahmen der Erfindung ist es auch vorgesehen, dass der Außenumfang der ersten Platte und der zweiten Platte bis auf die Kontaktstellen elektrisch isoliert ist.

Für das Messen der Kapazität des Plattenkondensators hat es sich als günstig gezeigt, wenn eine mit der Kontaktstelle der ersten Platte und der Kontaktstelle der zweiten Platte elektrisch leitend verbundene Empfängerspule vorgesehen ist. Durch den dadurch gebildeten passiven Schwingkreis kann durch Messen der Resonanzfrequenz des passiven Schwingkreises auf die Kapazitätsänderung des Plattenkondensators und damit auf die in der Schraubverbindung wirkende Axialkraft rückgeschlossen werden.

Im Rahmen der Erfindung hat es sich auch als vorteilhaft erwiesen, wenn die Zahl der Windungen der Empfängerspule in einem Bereich zwischen 2 und 25 Windungen, bevorzugt in einem Bereich zwischen 5 und 15 und besonders bevorzugt bei 10 Windungen liegt. Dies wirkt sich positiv auf den Herstellungsprozess der erfindungsgemäßen Unterlegscheibe aus, wobei es sich hierbei auch als vorteilhaft erwiesen hat, wenn die Empfängerspule dem Außenumfang des Plattenkondensators zugeordnet ist. Somit kann die Empfängerspule einfach um den Plattenkondensator gewickelt werden. Im Rahmen der Erfindung ist es jedoch auch vorgesehen, dass die Empfängerspule neben der den Plattenkondensator bildenden Unterlegscheibe angeordnet ist und nicht um den Plattenkondensator gewickelt ist.

Bewährt hat es sich außerdem, wenn dem Plattenkondensator außenumfangseitig ein Abstandshalter zur radialen Beabstandung der Empfängerspule von dem Plattenkondensator zugeordnet ist. Durch den Abstandshalter, der elektrisch isolierend ist, wird insbesondere die Induzierung von Wirbelströmen in der ersten Platte und in der zweiten Platte effektiv unterbunden, die die Auswertung der Resonanzfrequenz des passiven Schwingkreises und somit das Ziehen von Rückschlüssen auf die Axialkraft der Schraubverbindung erschweren.

Erfindungsgemäß ist zur Aufnahme eines Schraubenschaftes eine zentrisch in dem Plattenkondensator angeordnete Durchgangsöffnung vorgesehen. Dadurch kann eine zu befestigende Schraube mit ihrem Schraubenschaft einfach in die Unterlegscheibe gesteckt werden, wodurch ein Verrutschen der Unterlegscheibe vermieden wird. Im Rahmen der Erfindung ist es jedoch auch vorgesehen, dass die Unterlegscheibe lediglich unter den Schraubenkopf einer Schraube gelegt wird, wobei es sich hierbei vorteilhaft gezeigt hat, wenn in einem derartigen Fall mindestens eine zweite Unterlegscheibe verwendet wird, um die Lage der Schraube festlegen zu können und ein Verkippen der Schraube zu verhindern. Zwar hat sich bei Unterlegscheiben ein kreisrunder Außenumfang als besonders bevorzugt durchgesetzt, im Rahmen der Erfindung ist es jedoch auch vorgesehen, dass der Außenumfang eine davon abweichende Form, insbesondere eine rechteckige Form aufweist.

Weiterhin günstig hat es sich auch erwiesen, wenn die Durchgangsöffnung im Bereich der ersten Platte und/oder der zweiten Platte elektrisch isoliert ist. Dadurch ist insbesondere ausgeschlossen, dass ein in der Durchgangsöffnung befindlicher Schraubenschaft die erste Platte mit der zweiten Platte elektrisch kontaktiert, wodurch ein Messen der Axialkraft nicht mehr möglich wäre. Erfindungsgemäß sind ein erster Isolationsring der ersten Platte und ein zweiter Isolationsring der zweiten Platte zugeordnet. Durch derartige Isolationsringe, die beispielsweise aus härtbaren Harzen - wie Epoxidharz - gebildet sein können, wird die Gefahr eines durch den Schraubenschaft ausgelösten Kurzschlusses zwischen der ersten Platte und der zweiten Platte erheblich reduziert. Erfindungsgemäß ist der erste Isolationsring von dem zweiten Isolationsring axial beabstandet. Durch die axiale Beabstandung des ersten Isolationsringes von dem zweiten Isolationsring ist unter anderem sichergestellt, dass eine Kraftübertragung zwischen dem ersten Isolationsring und dem zweiten Isolationsring nicht erfolgen kann, die zur Folge hätte, dass eine auf die Unterlegscheibe wirkende Axialkraft nicht vollständig von dem Dielektrikum des Plattenkondensator erfasst werden würde, wodurch das Messergebnis verfälscht werden würde. Zudem wird durch die Isolationsringe gewährleistet, dass die Unterlegscheibe relativ zu dem Schraubenschaft zentriert wird, was sich wiederum positiv auf eine Koppelung mit einem Sensor auswirkt.

Zudem hat es sich als besonders vorteilhaft gezeigt, wenn der Innenseite der Durchgangsöffnung eine elastisch deformierbare, elektrische isolierende Hülse zugeordnet ist. Durch eine derartige Hülse ist insbesondere auch der Bereich der als Dielektrikum dienenden Isolationsschicht vor Wechselwirkungen mit dem Schraubenschaft geschützt. Dies zeigt sich insbesondere bei der Verwendung von selbstschneidenden Schrauben von großem Vorteil, da in diesem Falle unter Umständen Fremdmaterialspäne, insbesondere metallene Fremdmaterialspäne, in die Isolationsschicht eingebracht werden könnten, wodurch das Messergebnis ebenfalls verfälschen werden würde.

Weiterhin wird ein Sensor für das System offenbart, mit einer Erregerspule, die elektrisch leitend mit einer Erregerfrequenz periodisch alternierende Spannung bereit stellenden Spannungsquelle verbindbar und mit einer Empfängerspule induktiv koppelbar ist. Durch einen derartigen Sensor ist es möglich, die Axialkraft der Schraubverbindung induktiv zu messen.

Die Erregerspule ist induktiv mit der Empfängerspule gekoppelt und dieser zugeordnet, wobei der Empfängerspule ein Kontaktpaar zugeordnet ist, das geeignet ist zum elektrisch leitenden Verbinden der Empfängerspule mit der ersten Platte und mit der zweiten Platte der Unterlegscheibe.

Durch die Zuordnung der Empfängerspule zu der Erregerspule wird ein Vollsensor gebildet, der die Änderung der Resonanzfrequenz des passiven Schwingkreises messen kann, der durch eine elektrisch leitende Koppelung der Empfängerspule über das der Empfängerspule zugeordnete Kontaktpaar mit der ersten Platte und mit der zweiten Platte der Unterlegscheibe gebildet ist. Durch die induktive Koppelung der Erregerspule mit der Empfängerspule wird bei an die Erregerspule angelegter Spannung, die mit der veränderbaren Erregerfrequenz periodisch alterniert, der passive Schwingkreis zu erzwungenen mit der Erregerfrequenz schwingenden Schwingungen angeregt. Die induktive Kopplung erlaubt dabei zudem die berührungslose Auswertung der Resonanzfrequenz des passiven Schwingkreises bei sich ändernder Erregerfrequenz und damit das Messen der Axialkraft der Schraubverbindung. Günstig ist es hierbei, wenn die periodisch alternierende Spannung beispielsweise durch eine sinusförmig alternierende Spannung realisiert ist. Im Rahmen der Erfindung ist auch eine davon verschiedene Spannungsform vorgesehen.

Günstig ist es zudem, wenn die Empfängerspule koaxial zu der Erregerspule angeordnet ist. Eine derartige Anordnung ist einfach herzustellen, wodurch der Montageaufwand des Vollsensors reduziert wird.

Bewährt hat es sich außerdem, wenn die Erregerspule und die Empfängerspule nichtleitend zu einer Spuleneinheit verbunden sind. Hierbei ist es beispielsweise vorgesehen, dass die Erregerspule und die Empfängerspule zu einer ringförmigen Spuleneinheit verbunden sind. Dies kann beispielsweise durch Einspritzen beider Spulen in einen Kunststoffring erfolgen, wobei darauf zu achten ist, dass das der Empfängerspule zugeordnete Kontaktpaar zugänglich ist, um die Empfängerspule mit der ersten Platte und mit der zweiten Platte der Unterlegscheibe elektrisch leitend verbinden zu können. Insbesondere kann dadurch der Abstand der Empfängerspule zu der Erregerspule so gewählt werden, dass die induktive Koppelung optimiert wird. Weiterhin sind durch eine derartige Spuleneinheit und die damit verbundene Kapselung die einzelnen Spulen vor Umwelteinflüssen geschützt.

Als günstig hat es sich auch gezeigt, wenn eine Datenverbindung mit einer Datenbank vorgesehen ist zum Vergleichen der erfassten Messgröße mit einem in der Datenbank zu dem Wert der Messgröße korrespondierenden Kraftwert oder zum Auswerten des Wertes der Messgröße anhand einer in der Datenbank hinterlegten Kraftkurve. Somit kann nun durch einen einfachen Vergleich der Messgröße mit der Datenbank die Axialkraft bestimmt werden. Hierbei hat es sich als besonders günstig erwiesen, wenn als Messgröße die Resonanzfrequenz des passiven und über die Empfängerspule mit der Erregerspule induktiv gekoppelten Schwingkreises dient. Da die Resonanzfrequenz des passiven Schwingkreises von der Kapazität des durch die Unterlegscheibe gebildeten Plattenkondensators abhängt, kann durch Bestimmen des Spannungsverlaufes der Erregerspannung unter kontinuierlichem Verändern der Erregerfrequenz an einem der Erregerspule nachgeschalteten Widerstand die Resonanzfrequenz des passiven Schwingkreises gemessen und damit die Axialkraft quantitativ bestimmt werden.

Weiterhin hat es sich vorteilhaft erwiesen, wenn eine Ausgabeeinheit zum Anzeigen des Wertes der Messgröße und/oder der Axialkraft vorgesehen ist. Somit kann der Benutzer des Sensors auf einen Blick ablesen, ob die gewünschte Axialkraft erreicht wurde. Alternativ ist es dem Verwender des Sensors auch möglich, anhand der Messgröße auf die Axialkraft zu schließen.

Als besonders vorteilhaft hat es sich weiterhin gezeigt, wenn ein Datenfernübertragungsmittel zum automatischen Weiterleiten einer Unterschreitung eines vorgegebenen Sollwertes der Axialkraft vorgesehen ist. Das Datenfernübertragungsmittel kann beispielsweise durch eine Signalleitung, eine Funkverbindung oder durch ein RFID System gebildet sein. Dadurch kann beispielsweise bei einer Schraubverbindung, deren Axialkraft einen bestimmten Sollwert nicht unterschreiten darf - wie beispielsweise bei einer Schraubverbindung im Flugzeugbau oder im Kraftwerksbereich, ein Überwachen dadurch erfolgen, dass der Sensor der Schraubverbindung dauerhaft zugeordnet ist, wodurch eine Überwachung der Axialkraft der Schraubverbindung zu beliebigen Zeitpunkten erfolgen kann. Insbesondere kann bei Unterschreiten eines Sollwertes automatisch Alarm ausgelöst werden. Hierbei hat es sich auch vorteilhaft erwiesen, wenn dem Sensor eine Energiequelle zugeordnet ist. Somit kann der Sensor auch autark eingesetzt werden, nämlich insbesondere auch an den Stellen, die nur schwer zugänglich sind.

Offenbart wird weiterhin auch eine Kombination aus einem Sensor und einem Werkzeug mit einer Schraubenkopfaufnahme. Durch eine derartige Zuordnung des Sensors - sei es nun ein Basissensor oder ein Vollsensor - kann die Messung der Axialkraft der Schraubverbindung direkt beim Herstellen der Schraubverbindung erfolgen. In diesem Zusammenhang hat es sich vorteilhaft gezeigt, wenn der Sensor der Schraubenkopfaufnahme so zugeordnet ist, dass die Erregerspule axial vor der Eintrittsöffnung der Schraubenkopfaufnahme angeordnet ist. Hierdurch wird im Falle eines Basissensors die induktive Koppelung einer Empfängerspule mit der Erregerspule ermöglicht. Im Rahmen der Erfindung ist es auch vorgesehen, dass der Sensor als Vollsensor ausgebildet ist. In diesem Falle kann durch die axiale Beabstandung der Erregerspule die vorzugsweise mit der Erregerspule verbundene Empfängerspule vereinfacht mit einer ersten Platte und mit einer zweiten Platte elektrisch leitend verbunden werden.

Zudem hat es sich auch vorteilhaft erwiesen, wenn die Erregerspule radial von der Schraubenkopfaufnahme beabstandet ist. Insbesondere bei einer Beabstandung der Erregerspule durch ein elektrisches isolierendes Material lässt sich die Gefahr von in dem Werkzeug induzierten Wirbelströmen effektiv reduzieren.

Günstig ist es auch, wenn dem Werkzeug eine Spannungsversorgung zur Spannungsversorgung des Sensors zugeordnet ist. Durch die Auslagerung der Spannungsversorgung in das Werkzeug lässt sich der Sensor besonders kompakt konstruieren, was einen positiven Einfluss auf die Handhabbarkeit des erfindungsgemäßen Sensors hat.

Weiterhin hat es sich vorteilhaft gezeigt, wenn dem Werkzeug eine akustische und/oder optische Signalgebeeinheit zugeordnet ist. Durch eine derartige Signalgebeeinheit kann beispielsweise nach dem Erreichen einer vorgegebenen Sollkraft ein Hinweis an den Verwender der erfindungsgemäßen Kombination erfolgen, der nun Kenntnis davon hat, dass der Schraubvorgang erfolgreich war und die Schraubverbindung die gewünschte Axialkraft aufzubringen vermag.

Bewährt hat es sich auch, wenn das Werkzeug durch eine einen Innenunrund aufweisende Werkzeugnuss gebildet ist. Somit kann der Sensor an den jeweiligen Schraubendurchmesser, insbesondere an den Durchmesser einer zu dem Schraubendurchmesser korrespondierenden Unterlegscheibe, angepasst werden. Es kann also ein kompletter Satz Werkzeugnüsse zusammengestellt werden, die jeweils auf Schraubenköpfe mit unterschiedlichen Durchmessern angepasst sind. Im Rahmen der Erfindung ist es jedoch auch vorgesehen, dass das Werkzeug durch einen Drehmomentschlüssel gebildet ist.

Offenbart wird weiterhin eine Kombination aus einem Sensor und einer einem Schraubenkopf und einen Schraubenschaft umfassenden Schraube. Durch die Zuordnung des Sensors an eine Schraube, insbesondere an einen Schraubenkopf, lässt sich auf einfache Art und Weise die Überwachung der durch die Schraube ausgeübten Axialkraft einer Schraubverbindung einrichten, da nun der Sensor fest an dem Schraubenkopf verbleiben kann.

Vorteilhaft ist es zudem, wenn der Schraubenkopf einen Innenunrund aufweist. Bei einer derartigen Schraube lässt sich der Sensor einfach an dem Außenumfang des Schraubenkopfes anbringen. Alternativ hat es sich genauso günstig gezeigt, wenn der Schraubenkopf einen Außenunrund aufweist, und wenn der Schraubenkopf einen relativ zu dem Außenunrund axial gestaffelten radialen Kragen aufweist zur Befestigung des Sensors. Somit kann der Sensor auf einfache Art und Weist befestigt werden und erlaubt damit eine permanente Überwachung der Axialkraft der Schraubverbindung.

Offenbart wird zudem auch ein Verfahren zum Herstellen einer zum Messen einer Axialkraft einer Schraubverbindung geeigneten Unterlegescheibe, das die Schritte umfasst:

- Einseitiges Beschichten einer ersten elektrisch leitenden Platte und einer zweiten elektrisch leitenden Platte mit einer elektrisch isolierenden Schutzschicht, und
- Verbinden jeweils der von der Schutzschicht wegweisenden Fläche der ersten Platte und der zweiten Platte mit einer elektrisch isolierenden Isolationsschicht zu einem Plattenkondensator.

Durch ein derartiges Verfahren wird auf einfache Art und Weise ein Plattenkondensator gebildet, der zum kapazitiven Messen einer Axialkraft einer Schraubverbindung geeignet ist.

Bewährt hat es sich außerdem, wenn das einseitige Beschichten durch ein thermisches Spritzen erfolgt, wobei eine aus Keramik, vorzugsweise aus Al2O3 gebildete Schutzschicht auf die erste Platte und die zweite Platte aufgespritzt wird. Durch ein thermisches Spritzen kann auf einfache Art und Weise eine homogene Schutzschicht geschaffen werden, deren Schichtdicke gezielt eingestellt werden kann. Zudem ist durch die aufgeführte Materialwahl eine ausreichende Härte gegeben, um die Unterlegscheibe wiederverwenden zu können.

Für das Verfahren hat es sich weiterhin vorteilhaft erwiesen, wenn das Verfahren weiterhin die Schritte umfasst:

- außenumfangsseitiges Wickeln einer Empfängerspule um den Plattenkondensator, und
- Kontaktieren der Empfängerspule mit der ersten Platte und mit der zweiten Platte.

Durch das elektrisch leitende Kontaktieren der Empfängerspule mit dem Plattenkondensator ist ein passiver Schwingkreis realisiert, dessen Resonanzfrequenz sich als Funktion der von der Axialkraft abhängigen Kapazität des Plattenkondensators ändert, wodurch ein Bestimmen der Axialkraft einer Schraubverbindung erleichtert wird. Da die Empfängerspule der Unterlegscheibe zugeordnet ist, wird zudem zum Auslesen lediglich ein eine mit der Empfängerspule induktiv koppelbare Erregerspule beinhaltender Basissensor benötigt.

Günstig hat es sich auch gezeigt, wenn das Verfahren weiterhin den Schritt umfasst:

- Anbringen eines radialen Abstandshalters zwischen der Empfängerspule und dem Außenumfang des Plattenkondensators.

Durch einen derartigen Schritt wird insbesondere die Gefahr der Induzierung von Wirbelströmen in der ersten Platte und der zweiten Platte reduziert, die das Messen der Axialkraft erschweren würden.

Weiterhin umfasst die Erfindung ein Verfahren zum induktiven Messen einer Axialkraft einer Schraubverbindung, wobei das Verfahren die Schritte umfasst:

- induktives Koppeln einer Erregerspule, die mit einer mit einer veränderbaren Erregerfrequenz alternierenden Spannung bereitstellenden Spannungsquelle elektrisch leitend verbunden ist, mit einer Empfängerspule eines passiven Schwingkreises, der einen eine Unterlegscheibe bildenden Plattenkondensator beinhaltet,
- periodisches Verändern der Erregerfrequenz,
- Abgreifen einer durch die Empfängerspule beeinflussten Erregerspannung als Funktion der Erregerfrequenz,
- Detektieren des Spanungsverlaufes der Erregerspannung, und
- Ableiten der auf die Unterlegscheibe wirkenden Axialkraft auf dem Spannungsverlauf der Erregerspannung.

Durch ein derartiges Verfahren lässt sich die Axialkraft der Schraubverbindung sehr einfach bestimmen, wobei es weiterhin vorteilhaft ist, wenn das Ableiten der auf die Unterlegscheibe wirkenden Axialkraft die Schritte beinhaltet:

- Extrahieren einer Resonanzfrequenz des passiven Schwingkreises aus dem Spannungsverlauf der Erregerspannung,
- Abgleichen der zu der Resonanzfrequenz in einer Datenbank hinterlegten Kraftwerte, oder
- Auswerten der zu der Resonanzfrequenz korrespondierenden Axialkraft anhand einer in der Datenbank hinterlegten Kraftkurve.

Durch ein derartiges Verfahren müssen die Unterlegscheiben lediglich einmalig kalibriert werden, um die Resonanzfrequenz des passiven Schwingkreises zu einer vorgegebenen Axialkraft zu bestimmen. Mit einer derartig kalibrierten Unterlegscheibe ist es nun möglich, eine auftretende Resonanzfrequenz einer wirkenden Axialkraft zuzuordnen.

Als günstig hat es sich auch erwiesen, wenn weiterhin die Schritte vorgesehen sind:

- Vergleichen der auf die Unterlegscheibe wirkenden Axialkraft mit einem vorgegebenen Sollwert,
- Optische und/oder akustische Signalgabe bei Unterschreiten und/oder Überschreiten des Sollwertes, oder
- Automatisches Weiterleiten einer Unterschreitung des Sollwertes mittels einer Datenfernübertragungsmittels.

Dadurch wird dem Anwender des Verfahrens auf eindeutige Art und Weise signalisiert, wann die Axialkraft der Schraubverbindung die gewünschte Größe erreicht hat und er den Anziehvorgang abbrechen kann. Zudem wird ein unbeabsichtigtes Lösen einer Schraubverbindung automatisch erkannt und ein entsprechender Alarm ausgelöst.

Bewährt hat es sich auch, wenn das Messen der Axialkraft beim Herstellen einer Schraubverbindung erfolgt. Somit kann insbesondere bei einer Verwendung eines als Werkzeug dienenden Drehmomentschlüssels überprüft werden, ob das angelegte Drehmoment in der gewünschten Axialkraft der Schraubverbindung resultiert.

Besonders bevorzugt ist es zudem, wenn das Messen der Axialkraft nach einem vorgegebenen gegebenenfalls wiederkehrenden Zeitintervall erfolgt. Somit kann in wiederkehrenden Abständen überprüft werden, ob eine benötigte Axialkraft in einer Schraubverbindung noch vorhanden ist.

Im Folgenden wird die Erfindung an in der Zeichnung dargestellten Ausführungsbeispielen näher erläutert; es zeigen:

Fig. 1     ein System zum Messen einer Axialkraft einer Schraubverbindung,

Fig. 2     eine Schnittansicht einer Unterlegscheibe des Systems, und

Fig. 3     eine schematische Darstellung des Messprinzips des Systems.

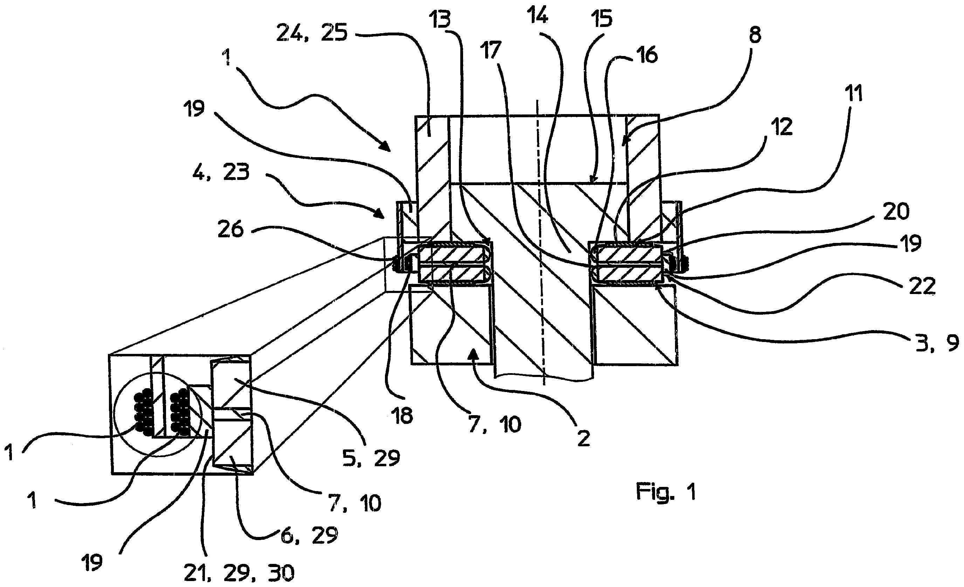

Figur 1 zeigt ein System 1 zum Messen einer Axialkraft einer Schraubverbindung 2, das eine Unterlegscheibe 3 und einen Sensor 4 zum Messen der Axialkraft beinhaltet. Die Unterlegscheibe 3 besteht hierbei aus einer elektrisch leitenden ersten Platte 5 und einer elektrisch leitenden zweiten Platte 6, die mit einer Isolationsschicht 7 zu einem Plattenkondensator 9 verbunden sind. Durch die axiale Staffelung der ersten Platte 5, der Isolationsschicht 7 und der zweiten Platte 6 ist ein Plattenkondensator 9 gebildet, dessen Kapazität C indirekt proportional vom Abstand der ersten Platte 5 zu der zweiten Platte 6 abhängt. Bei Auftreten einer auf den Plattenkondensator 9 wirkenden Axialkraft wird die als ein Dielektrikum 10 dienende Isolationsschicht 7, die aus einem Polymer gebildet ist, elastisch deformiert. Dadurch ändert sich der Abstand d zwischen der ersten Platte 5 und der zweiten Platte 6 und damit die Kapazität C des Plattenkondensators 9. Um die Charakteristik des Plattenkondensators 9 stets konstant zu halten und um Kurzschlüsse zwischen der ersten Platte 5 und der zweiten Platte 6 zu vermeiden, sind die Oberflächen 11 der ersten Platte 5 und der zweiten Platte 6, die von der Isolationsschicht 7 wegweisen, mit einer Schutzschicht 12 überzogen. Diese Schutzschicht 12 ist in dem gezeigten Ausführungsbeispiel aus Keramik, nämlich aus $Al_2O_3$ gebildet. Der Unterlegscheibe 3 ist eine zentrisch angeordnete Durchgangsöffnung 13 zugeordnet, die zur Aufnahme eines Schraubenschaftes 14 einer Schraube 15 dient. Um ein Kontaktieren der ersten Platte 5 und/oder der zweiten Platte 6 durch den Schraubenschaft 14 der Schraube 15 zu verhindern, ist der ersten Platte 5 und der zweiten Platte 6 im Bereich der Durchgangsöffnung 13 der ersten Platte 5 ein erster Isolationsring 16 und der zweiten Platte 6 ein zweiter Isolationsring 17 zugeordnet, wobei der erste Isolationsring 16 von dem zweiten Isolationsring 17 axial beabstandet ist. Der Unterlegscheibe 3 ist weiterhin außenumfangseitig eine Empfängerspule 18 zugeordnet, die zur Vermeidung von in der ersten Platte 5 und der zweiten Platte 6 induzierten Wirbelströmen durch einen Abstandshalter 19 radial von dem Plattenkondensator beabstandet ist. Die Zahl der Windungen der Empfängerspule 18 beträgt in dem gezeigten Ausführungsbeispiel 9 Windungen. Der Empfängerspule 18 ist ein Kontaktpaar 20 zugeordnet, das jeweils mit einer einem Außenumfang 30 der ersten Platte 5 und der zweiten Platte 6 zugeordneten Kontaktstelle 21 elektrisch leitend verbunden ist. Dadurch ist ein passiver Schwingkreis 22 realisiert, dessen Resonanzfrequenz von der Kapazität C des Plattenkondensators 9, der durch den Plattenkondensator 9 gebildet ist, abhängt. Bei einer auf die Schraubverbindung 2 wirkenden Axialkraft verändert sich der Abstand d zwischen der ersten Platte 5 und der zweiten Platte 6, was in einer erhöhten Kapazität C resultiert. Die Erhöhung der Kapazität C des Plattenkondensators 9 führt wiederum zu einer Reduzierung der Resonanzfrequenz des passiven Schwingkreises 22.

In der der Zeichnung ist weiterhin der als ein Basissensor 23 ausgeführter Sensor 4 dargestellt, der einem durch eine Werkzeugnuss 24 gebildeten Werkzeug 25 zugeordnet ist, das eine Schraubenkopfaufnahme 8 aufweist, und der es durch eine induktive Kopplung ermöglicht, die Axialkraft der Schraubverbindung 2 zu messen. Hierzu ist dem Basissensor 23 eine Erregerspule 26 zugeordnet, die in dem in der Figur 1 dargestellten Ausführungsbeispiel radial gestaffelt zu der Empfängerspule 18 angeordnet ist und mit dieser induktiv gekoppelt werden kann. Durch eine Spannungsquelle 27, die mit einer veränderbaren Erregerfrequenz periodisch alternierende Spannung bereitstellt, kann durch die induktive Kopplung zwischen der Empfängerspule 18 und der Erregerspule 26 der passive Schwingkreis 22 zu erzwungenen - mit der Erregerfrequenz schwingenden - Schwingungen angeregt werden. Durch einen der Erregerspule 26 nachgeschalteten Widerstand 28, der in der Zeichnung nicht dargestellt ist, kann der Spannungsverlauf der Erregerspannung als Funktion der Erregerfrequenz bestimmt werden, um die Resonanzfrequenz des passiven Schwingkreises 22 zu bestimmen. In einer Datenbank, die in der Zeichnung ebenfalls nicht dargestellt ist, sind zu den detektierten Resonanzfrequenzen des passiven Schwingkreises 22 korrespondierende Kraftwerte hinterlegt.

Somit kann durch einen Abgleich der gemessenen Resonanzfrequenz mit den in der Datenbank hinterlegten Werten die in der Schraubverbindung 2 wirkende Axialkraft bestimmt werden.

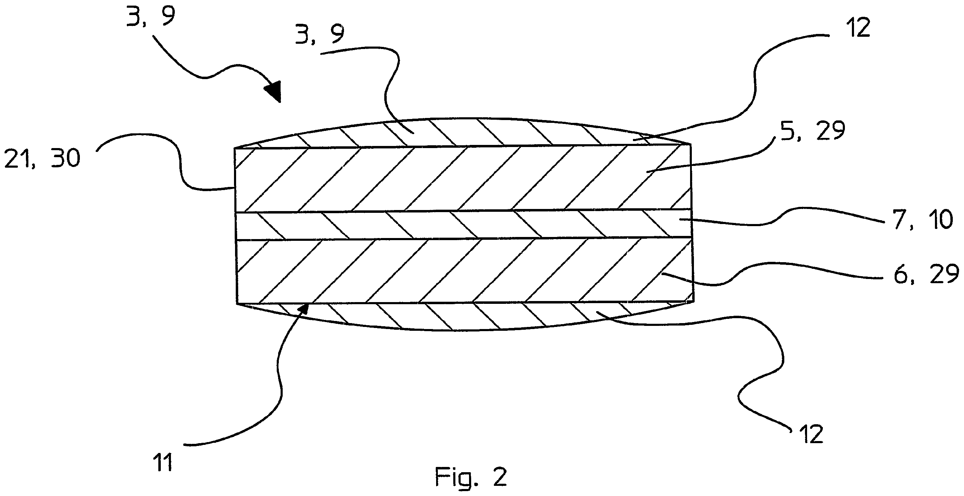

Figur 2 zeigt in einer Schnittansicht den Aufbau eines weiteren Ausführungsbeispiels einer erfindungsgemäßen Unterlegscheibe 3. Zwischen der ersten Platte 5 und der zweiten Platte 6, die jeweils elektrisch leitend sind und die die Elektroden 29 des Plattenkondensators 9 bilden, ist die als Dielektrikum 10 dienende Isolationsschicht 7 angebracht, die elektrisch isolierend wirkt und die bei einer auftretenden Axialkraft elastisch deformierbar ist. Die unter Krafteinwirkung elastische deformierbare Isolationsschicht 7 ist in dem gezeigten Ausführungsbeispiel aus Cycloolefin-Copolymer gebildet. Um stets gleichbleibende Bedingungen und eine optimale Kraftverteilung zu realisieren, ist die erste Platte 5 und die zweite Platte 6 mit einer Schutzschicht 12 versehen, die durch eine elektrisch isolierende Keramik, nämlich durch $Al_2O_3$ gebildet ist und mittels thermischem Spritzen jeweils auf die Oberfläche 11 der ersten Platte 5 und der zweiten Platte 6 aufgetragen wird, die von der Isolationsschicht 7 weg weist.

In dem in der Figur 2 dargestellten Ausführungsbeispiel ist der Unterlegscheibe 3 keine Empfängerspule 18 zugeordnet. Vielmehr ist die Empfängerspule 18 direkt einem als ein Vollsensor konzipierten Sensor 4 zugeordnet, der mit einem der Empfängerspule 18 zugeordneten Kontaktpaar 20 mit der ersten Platte 5 und der zweiten Platte 6 elektrisch leitend verbunden werden kann. Unter der Voraussetzung der Kenntnis sämtlicher Parameter des Plattenkondensators 9 wäre es möglich, die Axialkraft der Schraubverbindung 2 direkt aus der durch die Axialkraft bedingte Kapazitätsänderung des Plattenkondensators 9 zu berechnen.

Allerdings kann die Bestimmung der Axialkraft auch ohne eine direkte Berechnung erfolgen, indem - wie bezüglich Figur 1 beschrieben - lediglich die Verschiebung der Resonanzfrequenz des durch die Unterlegscheibe 3 und die Empfängerspule 18 gebildeten passiven Schwingkreises 22 gemessen wird und mit in einer Datenbank hinterlegten Werten verglichen wird, die in einer zuvor durchgeführten Kalibrierungsmessung erhalten wurden. Somit kommt es auf die konkrete Kapazität - beziehungsweise Kapazitätsänderung - des durch die erste Platte 5, die unter Krafteinwirkung elastisch deformierbare Isolationsschicht 7 und die zweite Platte 6 gebildeten Plattenkondensators 9 nicht an, da lediglich die Verschiebung der Resonanzfrequenz bestimmt wird.

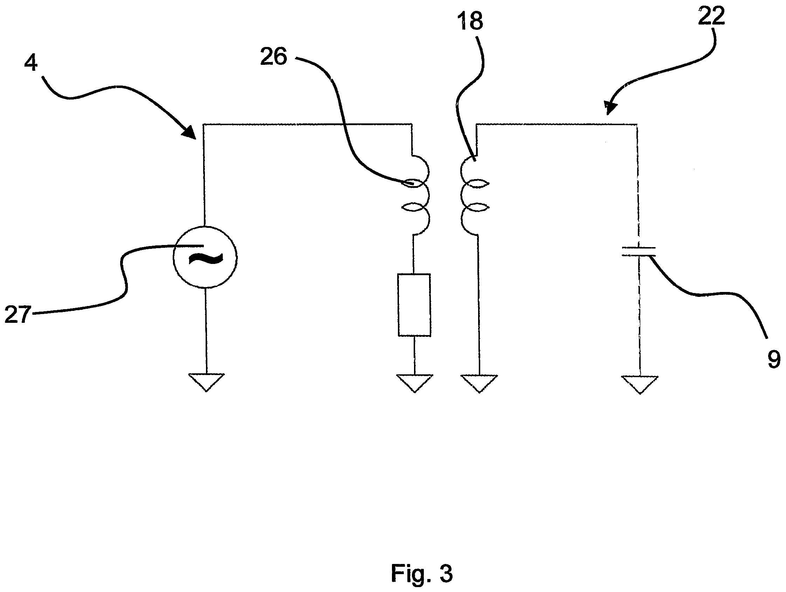

In der Figur 3 ist in einem Schaltbild das Systems 1 zur Messung einer Axialkraft dargestellt, das die induktive Koppelung der Erregerspule 26 mit der dem passiven Schwingkreis 22 zugeordneten Empfängerspule 18 beinhaltet. Durch die mit der Erregerfrequenz alternierenden Erregerspannung, die durch die Spannungsquelle 27 bereitgestellt wird, wird der passive Schwingkreis 22, der durch den Plattenkondensator 9 und die Empfängerspule 18 gebildet ist, durch die induktive Kopplung der Empfängerspule 18 mit der Erregerspule 26 in eine mit der Erregerfrequenz schwingende erzwungene Schwingung versetzt. Über den der Erregerspule 26 nachgeschalteten Widerstand 28 lässt sich der Spannungsverlauf der Erregerspannung bestimmen, der sich durch die Koppelung von Empfängerspule 18 und Erregerspule 26 als Funktion der Erregerfrequenz verändert. Aus dem Spannungsverlauf lässt sich dann die Resonanzfrequenz des passiven Schwingkreises 22 ableiten. Die Werte der Resonanzfrequenz hängen dabei von der Kapazität des Plattenkondensators 9 ab, die sich wiederum als Funktion der in der Schraubverbindung 2 wirkenden Axialkraft ändert. Somit können durch eine entsprechende Kalibrierung des passiven Schwingkreises 22 die gemessenen Resonanzfrequenzen der anliegenden Axialkraft der Schraubverbindung 2 zugeordnet werden.

Im Folgenden wird die Verwendung eines Systems 1 zum Messen einer Axialkraft einer Schraubverbindung 2 beschrieben. Zur Verbindung von zu verschraubenden Bauteilen wird eine Schraube 15, die einen Schraubenkopf und einen Schraubenschaft 14 aufweist, zusammen mit einer Unterlegscheibe 3 verwendet, die den Schraubenschaft 14 in einer Durchgangsöffnung 13 aufnimmt. Durch Festziehen der Schraube 15 mittels eines geeigneten Werkzeuges 25 wird eine Schraubverbindung 2 erzeugt, deren Axialkraft kapazitiv mit Hilfe der Unterlegscheibe 3 bestimmt werden kann. Die Unterlegscheibe 3 weist dazu eine jeweils mit einer Schutzschicht 12 geschützte erste Platte 5 und eine zweite Platte 6 auf, die Elektroden 29 eines Plattenkondensators 9 bilden und die zwischen sich eine aus einem elektrisch isolierenden Material gebildete Isolationsschicht 7 beherbergen, die als Dielektrikum 10 dient. Wie bereits umfangreich beschrieben, ändert sich mit zunehmender Axialkraft auch die Kapazität des Plattenkondensators 9. Zur Detektion der Kapazitätsänderung wird die Resonanzfrequenz eines passiven Schwingkreises 22 ausgewertet, der den Plattenkondensator 9 beinhaltet. Die den passiven Schwingkreis 22 komplettierende Empfängerspule 18 ist dabei je nach Ausführung entweder direkt mit dem Plattenkondensator 9 verbunden oder dem als Vollsensor ausgeführten Sensor 4 zugeordnet. Im ersten Fall erfolgt die Detektion der Resonanzfrequenz durch einen Basissensor 23, der über eine Erregerspule 26 induktiv mit der Empfängerspule 18 gekoppelt wird. Bei der Verwendung eines Vollsensors wird die Empfängerspule 18, die dem Vollsensor zugeordnet ist, zum Messen der Axialkraft mit der ersten Platte 5 und mit der zweiten Platte 6 der Unterlegscheibe 3 elektrisch leitend verbunden. Dadurch ist es nun - wie oben ausführlich beschrieben - möglich, die Verschiebung der Resonanzfrequenz zu bestimmen und damit die Axialkraft der Schraubverbindung 2. Wird beim Herstellen der Schraubverbindung 2 ein zuvor definierter Sollwert der Axialkraft erreicht, so wird dies entsprechend durch eine Signalgebeeinheit optisch und akustisch angezeigt. Zur Überprüfung der Axialkraft der Schraubverbindung 2 zu einem späteren Zeitpunkt muss nun lediglich die Resonanzfrequenz des passiven Schwingkreises erneut gemessen werden. Wenn der Sensor 4 permanent mit der Unterlegscheibe 3 verbunden ist, kann die Überprüfung der Resonanzfrequenz und daraus das Ableiten der Axialkraft auch in vorgegebenen Zeitintervallen erfolgen, wobei dann das Ergebnis durch ein Datenfernübertragungsmittel zur Auswertung weitergeleitet werden kann.

Bezugszeichenliste

| 1 | System |
| 2 | Schraubverbindung |
| 3 | Unterlegscheibe |
| 4 | Sensor |
| 5 | erste Platte |
| 6 | zweite Platte |
| 7 | Isolationsschicht |
| 8 | Schraubenkopfaufnahme |
| 9 | Plattenkondensator |
| 10 | Dielektrikum |
| 11 | Oberfläche |
| 12 | Schutzschicht |
| 13 | Durchgangsöffnung |
| 14 | Schraubenschaft |
| 15 | Schraube |
| 16 | erster Isolationsring |
| 17 | zweiter Isolationsring |
| 18 | Empfängerspule |
| 19 | Abstandshalter |
| 20 | Kontaktpaar |
| 21 | Kontaktstelle |
| 22 | Schwingkreis |
| 23 | Basissensor |
| 24 | Werkzeugnuss |
| 25 | Werkzeug |
| 26 | Erregerspule |
| 27 | Spannungsquelle |
| 28 | Widerstand |
| 29 | Elektroden |
| 30 | Außenumfang |

**Patentansprüche**

1.   Unterlegscheibe (3) für ein System zum Messen einer Axialkraft in einer Schraubverbindung (2), die Unterlegscheibe (3) bestehend aus einer elektrisch leitenden ersten Platte (5), einer elektrisch leitenden zweiten Platte (6), sowie aus einer zwischen der ersten Platte (5) und der zweiten Platte (6) angeordneten und die erste Platte (5) mit der zweiten Platte (6) zu einem Plattenkondensator (9) verbindenden elektrisch isolierenden Isolationsschicht (7), die unter Krafteinwirkung elastisch deformierbar ist, **dadurch gekennzeichnet, dass** jeweils auf einer von der Isolationsschicht (7) wegweisenden Oberfläche (11) der ersten Platte (5) und der zweiten Platte (6) eine elektrisch isolierende Schutzschicht (12) angeordnet ist, dass in dem Plattenkondensator (9) eine zentrische Durchgangsöffnung (13) vorgesehen ist, dass der ersten Platte (5) im Bereich der Durchgangsöffnung (13) ein erster Isolationsring (16) und der zweiten Platte (6) im Bereich der Durchgangsöffnung (13) ein zweiter Isolationsring (17) zugeordnet sind, und dass der erste Isolationsring (16) vom zweiten Isolationsring (17) axial beabstandet ist.

2. Unterlegscheibe nach Anspruch 1, **dadurch gekennzeichnet, dass** die Isolationsschicht (7) aus einem Material gebildet ist, das einer Gruppe entstammt, die härtbare Harze und Polymere beinhaltet.

3. Unterlegscheibe nach Anspruch 2, **dadurch gekennzeichnet, dass** die Isolationsschicht (7) aus Cycloolefin-Copolymer gebildet ist.

4. Unterlegscheibe nach einem der Ansprüche 1 bis 3, **dadurch gekennzeichnet, dass** der ersten Platte (5) und der zweiten Platte (6) jeweils eine elektrische Kontaktstelle (21) zugeordnet ist.

5. System zum Messen einer Axialkraft in einer Schraubverbindung (2), das System bestehend aus einer Unterlegscheibe (3) nach einem der Ansprüche 1 bis 4 und einem Sensor (4) mit einer Erregerspule (26), aus einer mit der Erregerspule (26) induktiv koppelbaren Empfängerspule (18), sowie aus einem der Empfängerspule (18) zugeordneten Kontaktpaar (20) zum elektrisch leitenden Verbinden der Empfängerspule (18) mit der ersten Platte (5) der Unterlegscheibe (3) und mit der zweiten Platte (6) der Unterlegscheibe (3), wobei durch eine elektrisch leitende Kontaktierung der Empfängerspule (18) mit der ersten Platte (5) und der zweiten Platte (6) ein Schwingkreis (22) gebildet ist.

6. System nach Anspruch 5, wobei die Erregerspule (26) elektrisch leitend mit einer veränderbaren Erregerfrequenz periodisch alternierende Spannung bereitstellenden Spannungsquelle (27) verbunden und mit der Empfängerspule (18) induktiv gekoppelt ist, **dadurch gekennzeichnet, dass** die Erregerspule (26) der Empfängerspule (18) zugeordnet ist, und dass der Empfängerspule (18) das Kontaktpaar (20) zugeordnet ist, das geeignet ist zum elektrisch leitenden Verbinden der Empfängerspule (18) mit einer ersten Platte (5) und mit einer zweiten Platte (6) in der Unterlegscheibe (3).

7. System nach Anspruch 6, **dadurch gekennzeichnet, dass** eine Datenverbindung mit einer Datenbank vorgesehen ist zum Vergleichen der erfassten Messgröße mit einem in der Datenbank zu dem Wert der Messgröße korrespondierenden Kraftwert oder zum Auswerten des Wertes der Messgröße anhand einer in der Datenbank hinterlegten Kraftkurve.

8. System nach Anspruch 6 oder 7, **dadurch gekennzeichnet, dass** eine Ausgabeeinheit zum Anzeigen des Wertes der Messgröße und/oder der Axialkraft vorgesehen ist.

9. System nach Anspruch 5, **dadurch gekennzeichnet, dass** die Zahl der Windungen der Empfängerspule (18) in einem Bereich zwischen 2 und 25 Windungen liegt.

10. Verfahren zum induktiven Messen einer Axialkraft einer Schraubverbindung (2), umfassend die Schritte:

- induktives Koppeln einer Erregerspule (26), die mit einer mit einer veränderbaren Erregerfrequenz alternierenden Spannung bereitstellenden Spannungsquelle (27) elektrisch leitend verbunden ist, mit einer Empfängerspule (18) eines passiven Schwingkreises (22), der einen eine Unterlegscheibe (3) bildenden Plattenkondensator (9) beinhaltet, bestehend aus einer elektrisch leitenden ersten Platte (5), einer elektrisch leitenden zweiten Platte (6), sowie aus einer zwischen der ersten Platte (5) und der zweiten Platte (6) angeordneten und die erste Platte (5) mit der zweiten Platte (6) zu dem Plattenkondensator (9) verbindenden elektrisch isolierenden Isolationsschicht (7), wobei jeweils auf der von der Isolationsschicht (7) wegweisenden Oberfläche (11) der ersten Platte (5) und der zweiten Platte (6) eine elektrisch isolierende Schutzschicht (12) angeordnet ist, wobei in der den Plattenkondensator (9) umfassenden Unterlegscheibe (3) eine zentrische Durchgangsöffnung (13) vorgesehen ist, wobei der ersten Platte (5) im Bereich der Durchgangsöffnung (13) ein erster Isolationsring (16) und der zweiten Platte (6) im Bereich der Durchgangsöffnung (13) ein zweiter Isolationsring (17) zugeordnet sind, und wobei der erste Isolationsring (16) vom zweiten Isolationsring (17) axial beabstandet ist,
- periodisches Verändern der Erregerfrequenz,
- Bestimmen des Spannungsverlaufes der Erregerspannung, und
- Ableiten der auf die Unterlegscheibe (3) wirkenden Axialkraft aus dem Spannungsverlauf der Erregerspannung.

11. Verfahren nach Anspruch 10, **dadurch gekennzeichnet, dass** das Ableiten der auf die Unterlegscheibe (3) wirkenden Axialkraft die Schritte beinhaltet:

- Extrahieren einer Resonanzfrequenz des passiven Schwingkreises (22) aus dem Spannungsverlauf der Erregerspannung,
- Abgleichen der zu der Resonanzfrequenz in einer Datenbank hinterlegten Kraftwerte, oder
- Auswerten der zu der Resonanzfrequenz korrespondierenden Axialkraft anhand einer in der Datenbank hinterlegten Kraftkurve.

12. Verfahren nach Anspruch 10 oder 11, **dadurch gekennzeichnet, dass** weiterhin die Schritte vorgesehen sind:

> - Vergleichen der auf die Unterlegscheibe (3) wirkenden Axialkraft mit einem vorgegebenen Sollwert,
> - optische und/oder akustische Signalgabe bei Unterschreiten und/oder Überschreiten des Sollwertes, oder
> - automatisches Weiterleiten einer Unterschreitung des Sollwertes mittels eines Datenfernübertragungsmittels.

13. Verfahren nach einem der Ansprüche 10 bis 12, **dadurch gekennzeichnet, dass** das Messen der Axialkraft beim Herstellen einer Schraubverbindung erfolgt.

## Claims

1. A washer (3) for a system for measuring an axial force in a screw connection (2), the washer (3) consisting of an electrically conductive first plate (5), an electrically conductive second plate (6), and of an electrically nonconducting insulating layer (7), which is arranged between the first plate (5) and the second plate (6) and connects the first plate (5) to the second plate (6) to form a plate capacitor (9), and which is elastically deformable under the action of force, **characterized in that** an electrically insulating protective layer (12) is arranged in each case on a surface (11), facing away from the insulating layer (7), of the first plate (5) and of the second plate (6), **in that** a central through-opening (13) is provided in the plate capacitor (9), **in that** a first insulating ring (16) is assigned to the first plate (5) in the region of the through-opening (13) and a second insulating ring (17) is assigned to the second plate (6) in the region of the through-opening (13), and **in that** the first insulating ring (16) is axially spaced apart from the second insulating ring (17).

2. The washer according to claim 1, **characterized in that** the insulating layer (7) is formed by a material, which is selected from a group including curable resins and polymers.

3. The washer according to claim 2, **characterized in that** the insulation layer (7) is formed by cycloolefin copolymer.

4. The washer according to any one of claims 1 to 3, **characterized in that** the first plate (5) and the second plate (6) are each assigned an electrical contact point (21).

5. A System for measuring an axial force in a screw connection (2), the system comprising a washer (3) according to any one of claims 1 to 4 and a sensor (4) with an excitation coil (26), a receiver coil (18) which can be inductively coupled to the excitation coil (26), and a pair of contacts (20) associated with the receiver coil (18) for electrically conductively connecting the receiver coil (18) to the first plate (5) of the washer (3) and to the second plate (6) of the washer (3), wherein an oscillating circuit (22) is formed by electrically conductively contacting the receiver coil (18) to the first plate (5) and the second plate (6).

6. The system according to claim 5, wherein the excitation coil (26) is electrically conductively connected to a voltage source (27) providing periodically alternating voltage at a variable excitation frequency and is inductively coupled to the receiver coil (18), **characterized in that** the excitation coil (26) is associated with the receiver coil (18), and that the receiver coil (18) is associated with the contact pair (20), which is suitable for electrically conductively connecting the receiver coil (18) to a first plate (5) and to a second plate (6) in the washer (3).

7. The system according to claim 6, **characterized in that** a data connection to a database is provided for comparing the sensed measurand with a force value in the database corresponding to the value of the measurand or for evaluating the value of the measurand using a force curve stored in the database.

8. The system according to claim 6 or 7, **characterized in that** an output unit is provided for displaying the value of the measurand and/or the axial force.

9. The system according to claim 5, **characterized in that** the number of turns of the receiver coil (18) is in a range between 2 and 25 turns.

10. A method for inductively measuring an axial force of a screw connection (2), comprising the steps:

> - inductively coupling an excitation coil (26), which is electrically conductively connected to a voltage source (27) providing a voltage alternating with a variable excitation frequency, to a receiver coil (18) of a passive oscillating circuit (22) including a plate capacitor (9) forming a washer (3), comprising an electrically conductive first plate (5), an electrically conductive second plate (6), and an electrically insulating layer (7) arranged between the first plate (5) and the second plate (6) and connecting the first plate (5) to the second plate (6) to form the plate capacitor (9), wherein an electrically insulating protective layer (12) is arranged in each case on the surface (11) of the first plate (5) facing away from the insulating layer (7) and on the surface (11) of the second plate (6) facing away from the insulating layer (7), wherein a central through-opening (13) is provided in the washer (3) surrounding the plate capacitor (9), wherein a first insulating ring (16) is associated with the first plate (5) in the region of the through-opening (13) and a second insulating ring (17) is associated with the second plate (6) in the region of the through-opening (13), and wherein the first insulating ring (16) is axially spaced from the second insulating ring (17),
- periodically varying the excitation frequency,
- determining the voltage characteristic of the excitation voltage, and
- deriving the axial force acting on the washer (3) from the voltage characteristic of the excitation voltage.

11. The method according to claim 10, **characterized in that** the deriving the axial force acting on the washer (3) includes the steps of:

- extracting a resonant frequency of the passive oscillating circuit (22) from the voltage curve of the excitation voltage,
- matching the force values stored in a database for the resonant frequency, or
- evaluating the axial force corresponding to the resonant frequency based on a force curve stored in the database.

12. The method according to claim 10 or 11, **characterized in that** furthermore the steps are provided:

- comparing the axial force acting on the washer (3) with a predetermined set value,
- optical and/or acoustic signaling when the setpoint value is undershot and/or exceeded, or
- automatic forwarding of an undershooting of the setpoint value by means of a remote data transmission means.

13. The method according to any one of claims 10 to 12, **characterized in that** the measurement of the axial force is carried out during the production of a screw connection.

## Revendications

1. Rondelle (3) pour un système de mesure d'une force axiale dans un assemblage à vis (2), la rondelle (3) consistant en une première plaque électriquement conductrice (5), une seconde plaque électriquement conductrice (6) et une couche d'isolation (7) électriquement isolante, qui est agencée entre la première plaque (5) et la seconde plaque (6), qui relie la première plaque (5) à la seconde plaque (6) en formant un condensateur à plaques (9) et qui peut être déformée élastiquement sous l'effet d'une force, **caractérisée en ce qu'**une couche de protection électriquement isolante (12) est agencée sur une surface (11) de la première plaque (5) et de la seconde plaque (6), opposée à la couche d'isolation (7), **en ce qu'**une ouverture de passage centrale (13) est prévue dans le condensateur à plaques (9), **en ce qu'**une première bague d'isolation (16) est associée à la première plaque (5) dans la zone de l'ouverture de passage (13) et une seconde bague d'isolation (17) est associée à la seconde plaque (6) dans la zone de l'ouverture de passage (13), et **en ce que** la première bague d'isolation (16) est espacée axialement de la seconde bague d'isolation (17).

2. Rondelle selon la revendication 1, **caractérisée en ce que** la couche d'isolation (7) est formée d'un matériau appartenant à un groupe qui contient des résines thermodurcissables et des polymères.

3. Rondelle selon la revendication 2, **caractérisée en ce que** la couche d'isolation (7) est formée de copolymère de cyclooléfine.

4. Rondelle selon l'une quelconque des revendications 1 à 3, **caractérisée en ce qu'**un point de contact électrique (21) est associé respectivement à la première plaque (5) et à la seconde plaque (6).

5. Système de mesure d'une force axiale dans un assemblage à vis (2), le système consistant en une rondelle (3) selon l'une quelconque des revendications 1 à 4 et un capteur (4) avec une bobine d'excitation (26), une bobine de réception (18) qui peut être couplée par induction à la bobine d'excitation (26) ainsi qu'une paire de contacts (20) associée à la bobine de réception (18) pour relier de manière électriquement conductrice la bobine de réception (18) à la première plaque (5) de la rondelle (3) et à la seconde plaque (6) de la rondelle (3), dans lequel un circuit résonnant (22) est formé en mettant en contact électriquement la bobine de réception (18) avec la première plaque (5) et la seconde plaque (6).

6. Système selon la revendication 5, dans lequel la bobine d'excitation (26) est reliée de manière électriquement conductrice à une source de tension (27) fournissant périodiquement une tension alternative à une fréquence d'excitation variable et est couplée de manière inductive à la bobine de réception (18), **caractérisé en ce que** la bobine d'excitation (26) est associée à la bobine de réception (18), et **en ce**

**que** la paire de contacts (20) est associée à la bobine de réception (18) et est appropriée pour relier de manière électriquement conductrice la bobine de réception (18) à une première plaque (5) et à une seconde plaque (6) dans la rondelle (3).

7. Système selon la revendication 6, **caractérisé en ce qu'**une liaison de données avec une base de données est prévue pour comparer la grandeur de mesure détectée avec une valeur de force correspondant à la valeur de la grandeur de mesure dans la base de données ou pour évaluer la valeur de la grandeur de mesure sur la base d'une courbe de force mémorisée dans la base de données.

8. Système selon la revendication 6 ou 7, **caractérisé en ce qu'**une unité de sortie est prévue pour afficher la valeur de la grandeur mesurée et/ou de la force axiale.

9. Système selon la revendication 5, **caractérisé en ce que** le nombre de tours de la bobine de réception (18) est compris entre 2 et 25.

10. Procédé de mesure inductive d'une force axiale d'un assemblage à vis (2), comprenant les étapes consistant à :

    - coupler de manière inductive une bobine d'excitation (26), qui est reliée de manière électriquement conductrice à une source de tension (27) fournissant une tension alternative à une fréquence d'excitation variable, avec une bobine de réception (18) d'un circuit résonnant passif (22), qui contient un condensateur à plaques (9) formant une rondelle (3), consistant en une première plaque électriquement conductrice (5), une seconde plaque électriquement conductrice (6), et une couche d'isolation électriquement isolante (7) agencée entre la première plaque (5) et la seconde plaque (6) et reliant la première plaque (5) à la seconde plaque (6) pour former le condensateur à plaques (9), dans lequel une couche de protection électriquement isolante (12) est agencée respectivement sur la surface (11) de la première plaque (5) et de la seconde plaque (6) dirigée à l'opposé de la couche d'isolation (7), dans lequel une ouverture de passage centrale (13) est prévue dans la rondelle (3) entourant le condensateur à plaques (9), dans lequel une première bague d'isolation (16) est associée à la première plaque (5) dans la région de l'ouverture de passage (13), et une seconde bague d'isolation (17) est associée à la seconde plaque (6) dans la région de l'ouverture de passage (13), et dans lequel la première bague d'isolation (16) est espacée axialement de la seconde bague d'isolation (17),

    - faire varier périodiquement la fréquence d'excitation,
    - déterminer le profil de tension de la tension d'excitation, et
    - dériver la force axiale agissant sur la rondelle (3) de la courbe de tension de la tension d'excitation.

11. Procédé selon la revendication 10, **caractérisé en ce que** la dérivation de la force axiale agissant sur la rondelle (3) contient les étapes suivantes consistant à :

    - extraire une fréquence de résonance du circuit résonnant passif (22) de la courbe de tension de la tension d'excitation,
    - ajuster les valeurs de force stockées dans une base de données à la fréquence de résonance, ou
    - évaluer la force axiale correspondant à la fréquence de résonance sur la base d'une courbe de force mémorisée dans la base de données.

12. Procédé selon la revendication 10 ou 11, **caractérisé en ce que** sont prévues en outre les étapes consistant à :

    - comparer la force axiale agissant sur la rondelle (3) avec une valeur de consigne prédéterminée,
    - délivrer un signal optique et/ou acoustique lorsque la valeur de consigne est dépassée vers le bas et/ou vers le haut, ou
    - transmettre automatiquement un dépassement vers le bas de la valeur de consigne au moyen d'un moyen de transmission de données à distance.

13. Procédé selon l'une des revendications 10 à 12, **caractérisé en ce que** la force axiale est mesurée lors de la réalisation d'un assemblage à vis.

Fig. 1

Fig. 2

EP 3 025 134 B1

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19831372 A1
- EP 1897778 A1